# EUROPEAN PATENT APPLICATION

(11) **EP 4 667 978 A1**
(43) Date of publication of application: **24.12.2025**
(21) Application number: 24211504.6
(22) Date of filing: 07.11.2024
(51) Int. Cl.: G01T 1/169, G01V 5/00

(54) **SYSTEM FOR 2D AND 3D DENSITY IMAGING USING ATMOSPHERIC (COSMIC) PARTICLES**

(30) Priority: 21.06.2024 EP 24183825
(71) Applicant: Paul Scherrer Institut, 5232 Villigen (CH)
(72) Inventor: Aliakbar, Ebrahimi, 79787 Lauchringen (DE); Kästli, Hans-Christian, 5425 Schneisingen (CH); Erdmann, Wolfram, 5303 Würenlingen (CH); Meier, Beat, 8153 Rümlang (CH); Rohe, Tilman, 5408 Ennetbaden (CH)
(74) Representative: Fischer, Michael

(57) **Abstract**

It is therefore the objective of the present invention to provide a system and a method for 2D and 3D density imaging using atmospheric (cosmic) particles, in particular muons, that offer a wide range of detection abilities.

This objective is achieved according to the present invention by a detection system for 2D and 3D density imaging of an object using atmospheric (cosmic) particles, in particular muons, penetrating that object,
comprising:
i) a particle detection subsystem (PDS) comprising a particle detection apparatus; said particle detection apparatus comprising a plurality of active semiconductor diode detection layers extending along a detection axis that corresponds to an axis of interest in terms of the direction of incoming particles after the penetration of the object; and
ii) an evaluation subsystem being enabled to determine the spatial and temporal detection of the interaction events of the particles within the various active semiconductor diode detection layer thereby enabling to determine the direction and the time of the incoming particles.

Therefore, the present invention provides for the novel use of semiconductor (D)MAPS in a very high resolution and simplified (integrated) muon radiography system. Multiple layers of semiconductor pixel or strip detectors are combined to construct a low-power portable muon radiography system. The various semiconductor diode layers of a semiconductor detector allow for reconstruction of the particle trajectories and use the angular information to measure the amount of matter traversed by particles coming from different angles.

## Description

The present invention relates to a system for 2D and 3D density imaging using atmospheric (cosmic) particles, in particular muons.

The subject matter described in this document relates to atmospheric (cosmic) particle detection instrument, systems and techniques for internal density imaging of objects and volumes for a multitude of applications.

In particular, the present invention relates to a particle detector and tracking system based on pixelized semiconductor technology, in particular (Depleted) Monolithic Active Pixel Sensors or (D)MAPS.

Internal imaging of very large scale or very dense natural and man-made objects and volumes, such as mountains, volcanoes and civil infrastructures, is either not possible or very limited. For instance, conventional inspection techniques for large-scale civil infrastructure are limited in range, laborious and involve access to hard to-reach locations. Moreover, most of the inspection techniques require intrusive drilling in the structure, which may cause instabilities and failures in the future.

Therefore, a noninvasive alternative technique enabling rapid and accurate investigations without depth limit and putting employees at risk is of great advantage.

Cosmic ray muon radiography is an innovative and noninvasive technique for internal density structure imaging that poses an ideal solution to the problem of radiography (2D) and tomography (3D) of large objects. This technique uses atmospheric particles generated by primary cosmic rays hitting the earth to probe objects and construct 2D and 3D models of their interior structures.

Cosmic rays are naturally occurring particle radiation. Primary cosmic rays which are produced in outer space and are mainly composed of protons, interact with the nuclei of nitrogen and oxygen in the Earth's atmosphere and generate showers of secondary particles. These include uncharged particles (neutrons, photons, etc.) and charged particles such as negative and positive muons, electrons and positron. Muon radiography uses these natural muons as a source of radiation.

Muons are subatomic particles very similar to the electrons, except that their mass is about 200 times larger and have a short lifetime of a few millionths of a second. At sea level, approximately 10'000 cosmic muons arrive per minute and square meter. While traversing matter, muons interact with the matter and gradually lose energy. The distance to the point where kinetic energy of the particle approaches zero and the particle comes to rest is called the range of the particle. The range varies depending on the type and initial energy of the particle and on the material it traverses. The atmospheric muons are highly penetrative. As a result, their range in soil and rock reaches several hundred meters. The attenuation and scattering of muons while traversing matter is measured with muon detectors placed under or behind the bulk of material and provides density information. Moreover, smaller objects of interest can be placed between multiple detector layers for non-invasive inspection of their internal structures. In addition to the muons, other atmospheric particles such as electrons and positrons can also be used for this purpose.

Position-sensitive silicon pixel detectors are used to reconstruct the trajectory of charged particles and decay vertices of non-stable particles with an impressive accuracy of a few micrometers. The generation of electron-hole pairs in silicon due to the interaction of ionizing particles with the atoms in sensor material is used as the detection principle. Early generation of pixel detectors are built around a hybrid technology which allows the particle sensing device and the readout chip to be produced in separately optimized processes. The two chips are then coupled electrically using a complex and expensive fine-pitch bump-bonding process to form a hybrid detector.

An alternative approach to produce pixel detectors is the monolithic technology in which the sensors and the readout electronics are parts of the same entity. The signal generated by charged particles in the original monolithic active pixel sensors (MAPS) developed in the late 1990s is small and slow since it is collected using the diffusion process. Fully depleted monolithic active pixel sensors (DMAPS) overcome the limitations of the MAPS by using the drift process in the electric field of a reverse biased diode as the detection mechanism. The fast charge collection by drift offers a higher radiation hardness and improved timing capabilities. The improved timing could be used to suppress background noise. The deeper charge collection depth compared to the MAPS, provides larger signal-to-noise ratio. Using DMAPS reduces the material and power budgets of the detector significantly. The (D)MAPS are fabricated using the commercial CMOS technology, therefore, large scale detectors can be built at a significantly reduced cost. Detectors designed in this way are exemplarily known from the International Patent Application WO 2004/064168 A1.

It is therefore the objective of the present invention to provide a system and a method for 2D and 3D density imaging using atmospheric (cosmic) particles, in particular muons, that offer a wide range of detection abilities.

This objective is achieved according to the present invention by a detection system for 2D and 3D density imaging of an object using atmospheric (cosmic) particles, in particular muons, penetrating that object,
comprising:
i) a particle detection subsystem (PDS) comprising a particle detection apparatus; said particle detection apparatus comprising a plurality of active semiconductor diode detection layers extending along a detection axis that corresponds to an axis of interest in terms of the direction of incoming particles after the penetration of the object; and
ii) an evaluation subsystem being enabled to determine the special and temporal detection of the collision events of the particles within the various active semiconductor diode detection layer thereby enabling to determine the direction and the time of the incoming particles.

Therefore, the present invention relates to the novel use of semiconductor (D)MAPS in a very high resolution and simplified (integrated) muon radiography system. Multiple layers of semiconductor pixel or strip detectors are combined to construct a low-power portable muon radiography system. The various semiconductor diode layers of a semiconductor detector allow for reconstruction of the particle trajectories and use the angular information to measure the amount of matter traversed by particles coming from different angles. Thus, the system has significant advantages for muon radiography and tomography over scintillator and gaseous detectors which have been used in proof-of-principle studies.

Further preferred embodiments of the present invention are given by the attached dependent claims.

Preferred embodiments of the present invention are hereinafter described in more detail with reference to the attached drawings which depict in:
- Fig. 1: schematically a first multi-layer muon detector; and
- Fig. 2: schematically a second multi-layer muon detector.

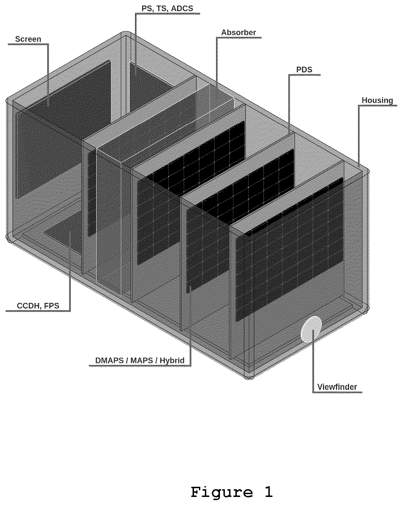

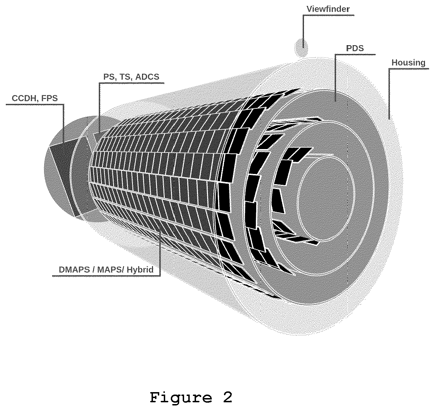

As shown in Figures 1 and 2, a preferred multi-layer muon detector according to the present invention may comprise the following subsystems:
i) the particle detection subsystem (PDS): a particle detection apparatus comprises a plurality of active semiconductor diode detection layers extending along an axis and/or cylindrically around an axis comprising a pixelized structure of the semiconductor detectors in each layer tailored to cover a large detection area/detection volume. The semiconductor detectors may usually comprise a depleted monolithic active pixel sensor also known as High-voltage Monolithic Active Pixel Sensor (HVMAPS) wherein each pixel comprises a semiconductor diode sensing element and a microelectronic signal processing circuit. The DMAPS can be, but not limited to, small-collection-electrode or large-collection-electrode types. In Monolithic Active Pixel Sensors (MAPS) each pixel comprises a sensing element and micorelectronic signal processing circuits. Hybrid pixel detectors comprise segmented (in pixels and/or strips) sensor chips electrically coupled to a segmented signal processing and readout chip. As shown in Figure 1, the layers of semiconductor pixel detectors (DMAPS / MAPS / Hybrid) are designed a flat layers that are disposed one after the other in parallel orientation. To the contrary, Figure 2 shows a cylindrical design where the layers of the semiconductor pixel detectors (DMAPS / MAPS / Hybrid) are disposed in a cylindrical manner one around the other which makes it look like a multi-shielded coax cable.

The signal processing and readout circuit of all above mentioned detectors may comprise preamplifiers and shapers, discriminators, sample-and-hold circuits, digitization circuits, shift-registers, data buffers and memory and time-to-digital converters for time-of-flight and other timing measurements as shown for example in the WO 2021/069243 A1.

The timing measurement can be used for background rejection. Further, the signal processing and readout circuit can comprise a charge injection system, a self-trigger system, a trigger output and digital-to-analog Converters (DAC), analog-to-digital Converters (ADC) and Phase-Locked Loops (PLL).

The system may also comprise in addition other layers of other active detection techniques such as scintillation detectors and Readout boards hosting semiconductor detector arrays. The active detection layers can be composed of smaller modules which can be combined to form different surface area and configurations.

Further, a preferred embodiment of the present invention comprises a Command, Configuration and Data Handling (CCDH) subsystem which comprises the following components:
i) Hardware (HW) in form of a Rugged Embedded Computer (REC) as the operations supervisor responsible for overall management of the apparatus. The REC can be comprised in one or more System-on-Chip (SoC) or System-on-Module (SoM) architectures. The REC can be operated using embedded operating systems or bare-metal software. The REC may further comprise FPGAs, hard- or soft-CPU cores, Data storage, Built-in touch screen for configuration, monitoring and acquisition preview, an Oscillator and Firmware and middleware (FW and MW), Human-machine interface and means for On-device processing of acquired data wherein some data processing might take place within the CCDH before the data are stored or transmitted. The Command, Configuration and Data Handling subsystem (CCDH) might apply data compression methods to reduce the number of bits to be stored or transmitted. It might apply one or more encoding schemes: automated alignment and/or automated calibration and tuning of active detectors.
ii) Software (SW)

The software package and toolkit for the data analysis and visualization can include the one or more of the following algorithms and tools:
Noise reduction, Hit clustering, Track (Trajectory) finding, Track reconstruction, radiography (2D) density image reconstruction and/or tomography (3D) density image reconstruction. The detector pixels/strips can be combined to form "super segments" to capture images at shorter exposure time.

In the interplay of the hardware and the software, a particular effort is undertaken for the track and image reconstruction of the incident particles. Charged particles that pass through the detector layers create signals in the semiconductor sensor diodes in each layer. These hits are then processed by the on-chip electronic circuits. The formation of a response signal to an incident particle occurs in one or more pixels of a layer and in one or more of the layers. Multi-pixel signals are referred to as clusters. The signal amplitude and transversal position of the hit is transmitted to the CCDH where it is considered as raw data which can be then processed to the on-board and/or external data storage systems.

The trajectory (or the track) of each incident particle can be reconstructed in a multiple of steps. In the first step, known as track finding, the detector signals (hits) which are possibly generated by the same charged particle are identified as track candidates. In a next step, a mathematical model of a typical track is then fitted to the track candidates to find an optimal set of parameters which uniquely describe the state of the particles and to find a covariance matrix associated with the parameters. A track hypothesis test is then performed to identify and exclude outliers.

The reconstructed tracks are then used to determine the relative position of the detector layers in a process called detector alignment. The track reconstruction and the alignment are performed iteratively to minimize the uncertainty of the reconstructed tracks. This procedure eliminates possible deteriorated image resolution that may result from a misalignment of the detector layers which could occur during transportation or due to change in environmental conditions. The final reconstructed tracks in the detector system are then extrapolated to the position of the object of interest to form 2D and 3D images thereof.

### iii) Structures Subsystem (SS)

A carefully designed chassis and housing which ensures portability and mechanical stability of the device is constructed to embody the DMAPS and readout electronics wherein the housing may be made water resistant. The housing can be made of light-weight carbon fiber and/or composite material for durability and portability. Any backboard circuit boards hosting power, control signal and data buses connection detector layers to the central SoC/SoM, including expansion slots for connecting to detector layers and readout boards.

Additionally, there can be passive absorber material placed in the front, behind or in between active detection layers. Further, means can be provided to change the distance between active detection layers to allow for adjustments of field-of-view and/or resolution.

### iv) Attitude Determination and Control subsystem (ADCS)

The ADCS may be used to determine and record the position and orientation of the detection system thereby using Built-in positioning system (GPS, Glonass, etc...), Built-in orientation detection system and/or view finder in order to assist in pointing the detection system to the object of interest. Automated attitude control can be used to correct the attitude in case of a drift of the detection device due to environmental conditions, in particular during long data taking periods.

### v) Telecommunication Subsystem (TS)

At least one wired or wireless long-distance communication channel such as Ethernet, WAN, WWAN, Satellite transponder can be comprised for data exchange/data transmission and reception purposes.

### vi) Electrical Power Supply, Distribution and/or Storage Subsystems (PS)

This can be for example one or more of photovoltaics and/or wind turbine for local power generation, internal or external battery storage system, high voltage supply to deplete semiconductor detectors and will mostly also include electrical circuitry for voltage and current regulation and distribution.

### vii) Fault Protection Subsystem (FPS)

This FPS serves to collect "housekeeping" data which may be composed of a wide range of measurements including subsystem states, configuration, voltages, currents, temperatures and relative humidity and the like. Additionally, a saving functionality may perform predefined actions such as graceful switching to standby mode or complete power-off in case of critical circumstances and failures. Also, a command-loss timer (CLT) can be implemented to provide a timer functionality for resetting various subsystems in case there was no external connection during a predefined amount of time. For safety reasons, an interlocking functionality can be present, too.

### viii) Thermal Control Subsystem (TCS)

This TCS can be used to maintain the thermal conditions of the detection system to prevent freezing, overheating, water condensations etc. The TCS may therefore comprise a temperature sensor, a relative humidity sensor, a fan, a heater and/or an air conditioning unit.

## Claims

1. A detection system for 2D and 3D density imaging of an object using atmospheric (cosmic) particles, in particular muons, penetrating said object,
said system comprising the following components:
i) a particle detection subsystem (PDS) comprising a particle detection apparatus; said particle detection apparatus comprising a plurality of active semiconductor diode detection layers extending along a detection axis that corresponds to an axis of interest in terms of the direction of incoming particles after the penetration of the object; and
ii) an evaluation subsystem being enabled to determine the special and temporal detection of the collision events of the particles within the various active semiconductor diode detection layers thereby enabling the evaluation subsystem to determine the direction and the time of the incoming particles.

2. The detection system according to claim 1 wherein the active semiconductor diode detection layers comprise a pixelized or strip-like structure of semiconductor detectors in each layer tailored to cover a predetermined area of detection.

3. The detection system according to claim 1 or 2, wherein the active semiconductor diode detection layers are designed as flat arrays of pixelized or strip-like structure of semiconductor detectors wherein the layers are disposed in a parallel manner one after the other.

4. The detection system according to claim 1 or 2, wherein the active semiconductor diode detection layers are designed as cylindrical arrays of pixelized or strip-like structure of semiconductor detectors wherein the layers are disposed in a cylindrical manner one around the other.

5. The detection system according to any of the preceding claims, wherein the evaluation unit is enabled to a run machine-readable code in order to analyze and/or visualize the hits of the incoming particles in the semiconductor diode detection layers thereby comprising one or more of the following functionalities:
i) Noise reduction,
ii) Hit clustering,
iii) Track (Trajectory) finding and/or Track (trajectory reconstruction of the incoming particles,
iv) radiography (2D) density image reconstruction and/or tomography (3D) density image reconstruction.
